# EUROPEAN PATENT APPLICATION

(11) **EP 4 792 776 A2**
(43) Date of publication of application: **19.08.2026**
(21) Application number: 26159375.0
(22) Date of filing: 18.02.2026
(51) Int. Cl.: A61C 8/00, A61C 5/70

(54) **DENTAL PROSTHETIC MOUNTING ASSEMBLY**

(30) Priority: 18.02.2025 US 202563759927 P; 11.02.2026 US 202619537250
(71) Applicant: Biofunctional Materials, LLC, Boca Raton, Florida 33487 (US); Giorno, Thierry M, Sunny Isles Beach, Florida 33138 (US)
(72) Inventor: GIORNO, Thierry M, Sunny Isles Beach, FL 33138 (US)
(74) Representative: J A Kemp LLP

(57) **Abstract**

A dental prosthetic mounting assembly that includes an implant, and a prosthetic attachable to the implant via an interface including a "spheric" screw having a frustospherical portion. The prosthetic may include a screw seat that may be shaped to receive the frustospherical portion of the spheric screw. The interface may also include an abutment attachable between the implant and prosthetic, and the abutment may comprise a mounting boss receivable by a mounting socket in the prosthetic, the mounting socket being shaped to leave an arched gap between an inner concave surface of the socket, and an outer frustoconical surface of the boss.

## Description

### CROSS-REFERENCES TO RELATED APPLICATIONS

This application claims the benefit of the filing date of United States Provisional Patent Application Serial Number 63/759,927 filed February 18, 2025 and United States Utility Patent Application Serial Number 19/537,250 filed February 11, 2026.

### BACKGROUND

### FIELD

This application relates generally to dental implant systems for supporting dental prosthetics.

### DESCRIPTION OF RELATED ART

Installation of dental prosthetics atop implants requires precise alignment of fasteners, prosthetic, implant, and intervening abutments. Many such abutments may each have a protruding annular alignment "cone" that extends integrally and coaxially from around a screw hole of the abutment and that has a frustoconical cone surface that assists with alignment. But this cone limits the angle at which multiple abutments can be installed relative to one-another on implants in a patient's bone, before their cones can no longer all be inserted into respective receiving sockets of a prosthetic or prosthetic substructure.

Without a substantial cone or other aligning feature located on each abutment, the abutments may still be secured to the prosthetic by screws. But if doing so causes one or more of the screws to become misaligned in its socket within the prosthetic, (or if the abutment itself is slightly misaligned from an ideal position) tightening the screw may focus pressure on a small point of the screw head, risking structural damage to the prosthetic before sufficient force is applied to properly align and secure the abutments to the prosthetic.

### SUMMARY

A dental prosthetic mounting assembly may comprise a screw having a head including a frustospherical engagement surface, a dental prosthetic comprising a bore for receiving the screw, and a screw seat disposed in the prosthetic. The screw seat may be shaped to complement and engage the frustospherical engagement surface of the screw, and oriented so that the frustospherical engagement surface of the screw secures the prosthetic to an implant or abutment when the screw is seated in the screw seat and threadedly engaged with the implant or abutment. Acceptable load distribution may thus be maintainable between the frustospherical engagement surfaces of the screw and screw seat despite axial misalignment of the screw and bore.

A dental prosthetic mounting assembly may also or alternatively comprise first and second abutments mountable on respective first and second dental implants implanted in spaced-apart non-parallel positions in a patient's jaw. The abutments may be axially-aligned with the implants and thus non-parallel with respect to one another when mounted. Each abutment may include a mounting boss comprising an outer cylindrical locking surface extending from the prosthetic-facing platform surface, and an outer frustoconical surface extending axially outward and tapering radially inward from around a distal outer end of the outer cylindrical locking surface. This mounting assembly may also comprise a dental prosthetic substructure for carrying a dental prosthetic superstructure, the substructure comprising first and second mounting sockets shaped and angled to receive the outer cylindrical locking surfaces and the outer frustoconical surfaces of the mounting bosses of the respective first and second nonparallel abutments. Each socket may include an inner cylindrical locking surface that is disposed around a distal outer end of the socket and is shaped to complement and receive into engagement the outer cylindrical locking surface of the mounting boss of one of the first and second abutments. At least one of the mounting sockets may comprise a generally concave inner surface formed such that it leaves an arched gap between the socket's inner surface and the outer frustoconical surface of the boss when the mounting socket is engaging the outer cylindrical locking surface of one of the abutments. The socket's concave inner surface may thereby permit the frustoconical surface to be initially inserted despite greater degrees of axial and rotational misalignment with the bore.

There is disclosed a dental prosthetic mounting assembly comprising: a screw comprising: a head including a frustospherical engagement surface, and a threaded shank extending axially from the head, the head and shank having a common longitudinal rotational axis. The dental prosthetic mounting assembly may comprise a dental prosthetic comprising a bore for receiving the screw; and a screw seat disposed in the prosthetic and shaped to complement and engage the frustospherical engagement surface of the screw, and oriented so that the frustospherical engagement surface of the screw secures the prosthetic to an implant or abutment when the screw is seated in the screw seat and threadedly engaged with the implant or abutment, whereby acceptable load distribution is maintainable between the frustospherical engagement surfaces of the screw and screw seat despite axial misalignment of the screw and bore.

Optionally, the prosthetic bore comprises: an upper bore section sized to receive the screw shank and head, and a lower bore section disposed coaxially with the upper bore section and having a diameter smaller than a diameter of the screw head and larger than a diameter of the screw shank; and the screw seat extends between a lower end of the upper bore section and an upper end of the lower bore section.

Optionally, the screw seat: comprises an aperture axially aligned with the bore, the aperture having a diameter larger than the diameter of the screw shank, but less than the diameter of the frustospherical engagement surface of the screw; and is configured to support the screw for pivotal motion about a center point equidistant from all positions on the frustoconical engagement surface, when the screw head is engaged in the screw seat.

Optionally, the assembly includes a dental implant; and the screw seat is oriented so that the frustospherical engagement surface of the screw secures the prosthetic directly to the dental implant when the screw is seated in the screw seat and threadedly engaged with the dental implant.

Optionally, the assembly includes an abutment configured to support the prosthetic; and the screw seat is oriented so that the frustospherical engagement surface of the screw secures the prosthetic to the abutment when the screw is seated in the screw seat and threadedly engaged with the abutment.

Optionally, the abutment includes a boss integrally extending from a prosthetic-facing platform surface of the abutment, the boss comprising: an outer cylindrical locking surface extending from the prosthetic-facing platform surface; an outer frustoconical surface extending axially outward and tapering radially inward from around a distal outer end of the outer cylindrical locking surface; and the prosthetic includes a socket shaped to complement and receive into engagement the outer cylindrical locking surface, thereby positively positioning the prosthetic relative to the abutment.

Optionally, the prosthetic's socket comprises a generally concave inner surface formed where it will leave an arched gap between the socket's inner surface and the outer frustoconical surface of the boss when the socket is engaging the outer cylindrical locking surface, whereby the socket's concave inner surface permits the frustoconical surface to be initially inserted despite greater degrees of axial and rotational misalignment with the bore.

Optionally, the screw seat is formed within the prosthetic.

Optionally, the screw seat extends between a lower end of the upper bore of the prosthetic and an upper end of the lower bore of the prosthetic.

Optionally, the dental prosthetic includes a generally annular base insert received in a base seat of the prosthetic; the screw seat is formed in the generally annular base insert; and the base seat is shaped to receive the base insert within the prosthetic into a position where the base insert is disposed between the screw and the prosthetic when the screw is received in the annular base insert.

Optionally, the prosthetic includes a prosthetic superstructure resembling one or more teeth; the prosthetic includes a prosthetic substructure shaped to receive multiple abutments and to receive the prosthetic superstructure; the bore and screw seat are formed within the prosthetic substructure.

There is disclosed a dental prosthetic mounting assembly comprising: first and second abutments mountable on respective first and second dental implants implantable in spaced-apart non-parallel positions in a patient's jaw, the abutments being axially-aligned with the implants and thus non-parallel with respect to one another when mounted, each abutment including a mounting boss. The mounting boss may comprise an outer cylindrical locking surface extending from the prosthetic-facing platform surface; and an outer frustoconical surface extending axially outward and tapering radially inward from around a distal outer end of the outer cylindrical locking surface. There may be a dental prosthetic substructure for carrying a dental prosthetic superstructure and comprising first and second mounting sockets shaped and angled to receive the outer cylindrical locking surfaces and the outer frustoconical surfaces of the mounting bosses of the respective first and second nonparallel abutments, and each socket including an inner cylindrical locking surface that is disposed around a distal outer end of the socket and is shaped to complement and receive into engagement the outer cylindrical locking surface of the mounting boss of one of the first and second abutments; and at least one of the mounting sockets may comprise a generally concave inner surface formed such that it leaves an arched gap between the socket's inner surface and the outer frustoconical surface of the boss when the mounting socket is engaging the outer cylindrical locking surface of one of the abutments, whereby the socket's concave inner surface permits the frustoconical surface to be initially inserted despite greater degrees of axial and rotational misalignment with the bore.

Optionally, the dental prosthetic mounting assembly comprises: first and second screws, each comprising: a head including a frustospherical engagement surface, and a threaded shank extending axially from the head, the head and shank having a common longitudinal rotational axis; a dental prosthetic comprising first and second bores for receiving the first and second screws, respectively, and respective first and second screw seats coaxially disposed with the first and second bores, respectively, in the prosthetic, and shaped to complement and engage the frustospherical engagement surfaces of the respective first and second screws, and oriented such that the frustospherical engagement surfaces of the screws secure the prosthetic to the respective first and second abutments when the first and second screws are seated in the respective first and second screw seats and threadedly engaged with the respective first and second abutments, whereby the first and second screws have freedom of motion to swivel about more than one axis while engaged in their respective screw seats.

### DRAWING DESCRIPTIONS

These and other features and advantages will become apparent to those skilled in the art in connection with the following detailed description and appended drawings of one or more embodiments of the invention, in which:
Figure 1 is a perspective view of a dental prosthetic mounting assembly abutment;
Figure 2 is a perspective view of an alternative dental prosthetic mounting assembly abutment, the alternative abutment having a smaller mounting boss than the abutment of Fig. 1;
Figure 3 is a cross-sectional view of a dental prosthetic mounting assembly taken along a central longitudinal axis of the assembly and showing a prosthetic and an implant installed upon axially opposite ends of the abutment of Fig. 1;
Figure 4 is a cross-section view of a dental prosthetic mounting assembly taken along a central longitudinal axis of the assembly and showing a prosthetic and an implant installed on either end of a multiple-part abutment having the same mounting boss feature as the abutment of Fig. 1;
Figure 5 is a closeup cross-sectional view showing a screw received in the upper part of the abutment of Fig. 1 and taken along a central longitudinal axis of the screw and abutment;
Figure 6 a cross-sectional view of a prosthetic substructure mounted atop two abutments having the same mounting boss as the abutment of Fig. 1;
Figure 7 is a cross-sectional view of a prosthetic substructure having bores and seats for frustospherical screws, and mounted atop two abutments having the same mounting boss as the abutment of Fig. 1;
Figure 8 is a cross-sectional view of a prior art prosthetic substructure mounted atop two prior art abutments;
Figure 9 is a side view of a screw comprising a head that includes a frustospherical portion;
Figure 10 is a perspective view of the head of the screw shown in Fig. 9;
Figure 11 is an axial view of the head of the screw shown in Fig. 9;
Figure 12 is a perspective view of an elongated-head variant of the screw shown in Fig. 9;
Figure 13 is a cross-sectional view of the screw shown in Fig. 12 and taken along a central longitudinal/rotational axis of the screw;
Figure 14 is a side view of the screw shown in Fig. 12; and
Figure 15 is a cross-sectional view of a prosthetic mounted atop the abutment of Fig. 1 via a variant of the screw of Fig 12, and including a prosthetic substructure comprising an annular base insert sandwiched between the screw head and the prosthetic.

### DETAILED DESCRIPTION

Various configurations of a dental prosthetic mounting assembly are shown at 10 in the Figures. The dental prosthetic mounting assembly 10 comprises an implant 12, and a prosthetic 14 attachable to the implant 12 via an interface including a "spheric" screw 16 having a frustospherical portion 18, The prosthetic 14 may include a screw seat 20 that may be shaped to receive the frustospherical portion 18 of the spheric screw 16. The interface may also include an abutment 22 attachable between the implant 12 and prosthetic 14.

Depending on requirements, a complete dental prosthetic mounting assembly 10 may require various numbers of the above components. A single prosthetic tooth, for example, may be secured to a single implant 12, sometimes with no need for an abutment 22. In contrast, larger prosthetics such as a bridge, or set of dentures, may require multiple (and multiple types of) implants 12 and abutments 22 per installation.

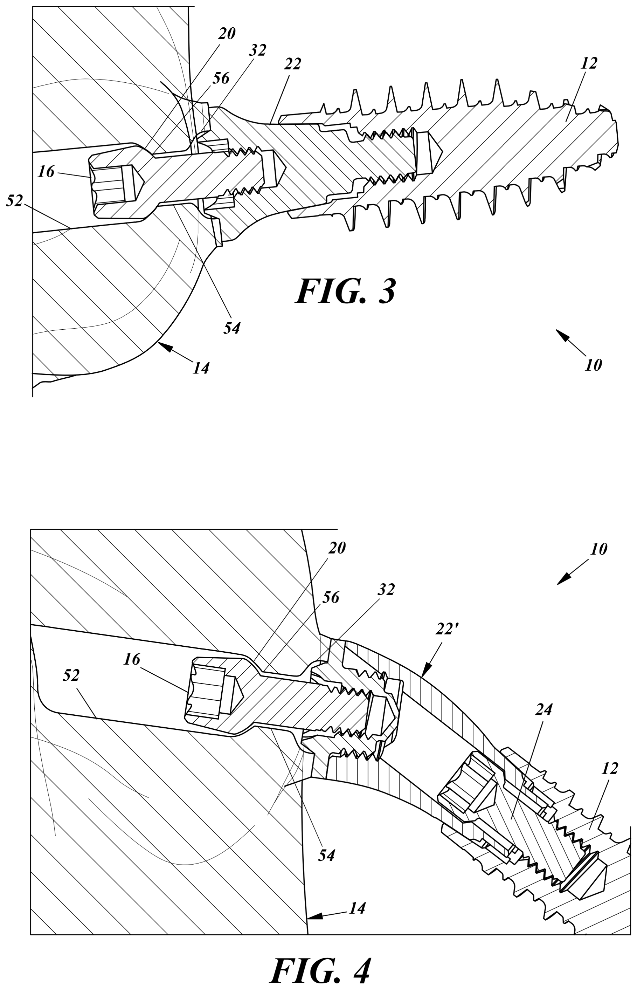

The assembly 10 may be compatible with many different types of these implants 12 and abutments 22. The implants 12 may comprise any common dental implant configured to be anchored in living bone, while the abutments 22 may comprise several variants. For example, one type of abutment 22 may comprise a single-piece abutment configured to thread directly into the implant 12, as shown in Fig. 3. Another abutment example, shown in Fig. 4, may comprise a multi-part abutment 22' securable to the implant 12 via a separate abutment screw 24. As shown in Fig. 4, the parts of the multi-part abutment 22' may be assembled so that the abutment screw 24 and the spheric screw 16 are not coaxial when installed, allowing for more flexibility in the placement and angling of implants 12 relative to their points of connection to the prosthetic 14.

Where convenient, one or more of the implant 12, abutment 22', abutment screw 24, and spheric screw 16 may be shaped to receive the same type and/or size of hexalobular screwdriver attachment, minimizing the number of tools needed for installation of the assembly 10. In the example shown in Fig. 4, the spheric and abutment screws 16, 24 are shaped for compatibility with a first hexalobular driver size, while the implant 12 and at least one part of the abutment 22' share a second hexalobular driver size.

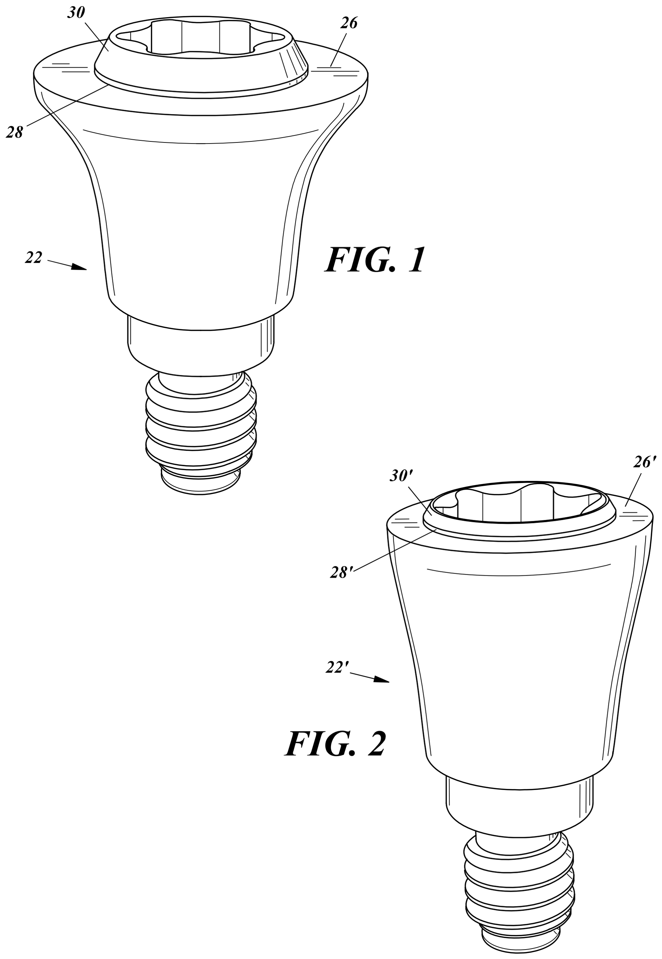

As best shown in Figs. 1, 2, and 5, any variant of the abutment 22 (or the implant 12, if a direct installation is appropriate) may also comprise a platform surface 26 located on a prosthetic-facing end of the abutment 22. A boss may be formed on the platform surface 26, the boss comprising a locking cylinder 28 extending normal from the platform surface 26, and an annular cone 30 tapering radially inward from the prosthetic-facing end of the locking cylinder 28. The prosthetic 14 may include a socket 32 shaped to receive the cone 30 and locking cylinder 28 when the spheric screw 16 is fully tightened, as shown in Figs. 3 and 4.

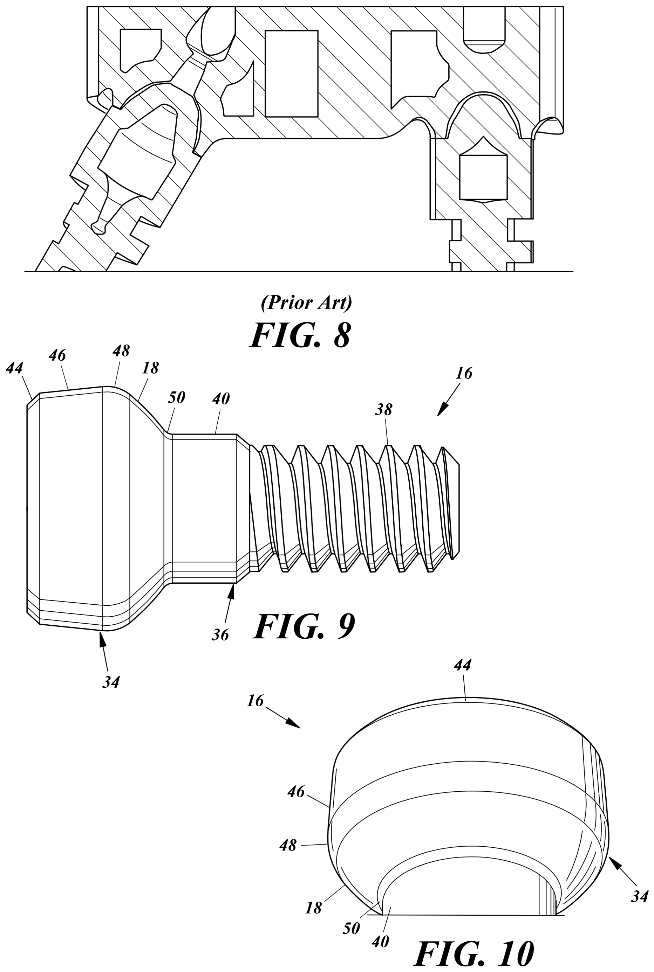

The spheric screw 16 may comprise a head 34, one or more portions of a shank 36 (for example, a threaded shank portion 38 at a first end of the spheric screw 16, joined to an unthreaded shank portion 40 of slightly different diameter than the threaded portion 38, as shown in Figs. 9 and 12-14). An axial socket 42 for a screwdriver may extend into the interior of the screw head 34 from a distal end of the head 34, and the exemplary embodiments in the appendix depict this socket 42 as being shaped to receive a hexalobular-type driver.

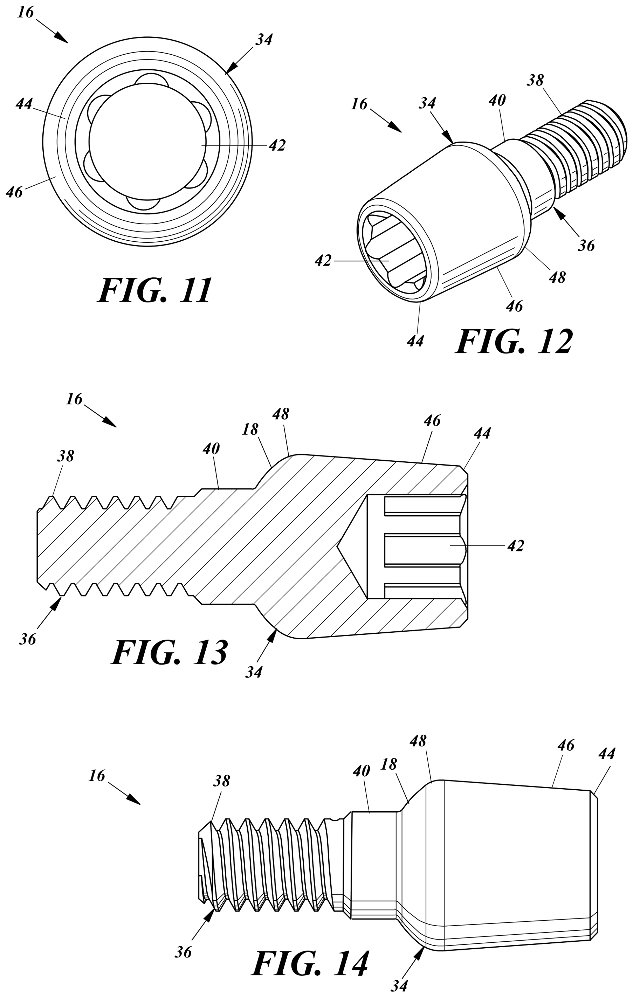

Depending on the embodiment, the dimensions of the features of the spheric screw 16 may vary relative to one another. For example, Figs. 9 and 10 show a variant of the spheric screw 16 with a shorter head 34 than the spheric screw variant of Figs. 11-14. For another example, in some embodiments the diameter of the unthreaded portion 40 of the spheric screw 16 may be the same as, larger than, or smaller than, the diameter of the threaded portion 38. These variations may respond to different priorities. For example, the diameter of the unthreaded portion 40 may be of a smaller diameter than the threaded portion 38 to introduce a weak point that would provide a predictable breaking point in case of fracture, thereby enabling an easier retrieval of a broken screw 16. In contrast, a larger diameter unthreaded portion 40 may be provided where additional strength is required.

In the examples shown in Figs. 9-14, the exterior of the spheric screw's head 34 may include a beveled distal edge 44, an outer frustoconical contour 46 that tapers radially outward as it extends from the beveled distal edge 44 to a frustotoroidal upper transitional contour 48, which fairs into an annular frustospherical engagement surface 18, which fairs into the unthreaded portion 40 of the shank 36 via a lower transitional contour 50. In other embodiments, the contours of the screw 16 may be altered, added to, or subtracted from, provided that the screw 16 includes a frustospherical engagement surface 18.

The prosthetic 14 may include an upper bore 52 sized to receive the spheric screw's shank 36 and head 34, and a lower bore 54 disposed coaxially with the upper bore 52 and having a diameter smaller than a diameter of the screw head 34 and larger than a diameter of the screw shank 36. The prosthetic 14 may also include a screw seat 20 extending between the upper 52 and lower 54 bore, and shaped to closely complement and receive the spheric screw's frustospherical engagement surface 18.

The screw seat 20 and frustospherical engagement surface 18 may generally share a radius, so that the seat 20 may support the screw 16 for pivotal motion about a center point equidistant from all positions on the frustoconical engagement surface, while maintaining contact across overlapping areas of the screw seat 20 and frustospherical engagement surface 18. In other words, the seat 20 and frustospherical engagement surface 18 of the screw 16 may act as a ball joint. An aperture 56 in the screw seat 20 may be aligned with the lower bore 54, and shaped to loosely receive the shank 36 of the screw 16, with the diameter of both the lower bore 54 and aperture 56 leaving room for the shank 36 to move within the aperture 56 if the screw 16 is swiveled in the screw seat 20 (as distinguished from merely rotating around the screw's longitudinal axis).

The resulting frustospherical area of engagement between screw 16 and screw seat 20 permits the screw 16 a small amount of movement to seek threaded engagement with the abutment 22 or implant 12, if the implant 12 and/or abutment 22 is not perfectly aligned with the prosthetic 14. The frustospherical area of engagement also enables the screw 16 to self-center within the seat 20 as the screw 16 is tightened, while pulling the prosthetic 14 into alignment with the abutment 22 and/or implant 12. Finally, the frustospherical area of engagement helps to smoothly distribute stress across the screw seat 20 as the screw 16 is tightened, even while the screw's shank 36 is not perfectly aligned with the prosthetic's aperture 56. In prior art prosthetic screws, (even those having rounded or conical head portions) this misalignment would create much more asymmetric stress distribution on the seat 20, leading to binding and/or damage. The spheric screw 16 is comparatively better able to adjust to accommodate greater deviations in abutment 22 or implant angle (whether caused by error or by necessity) in multi-abutment/implant applications, without threatening the structural integrity of the prosthetic 14.

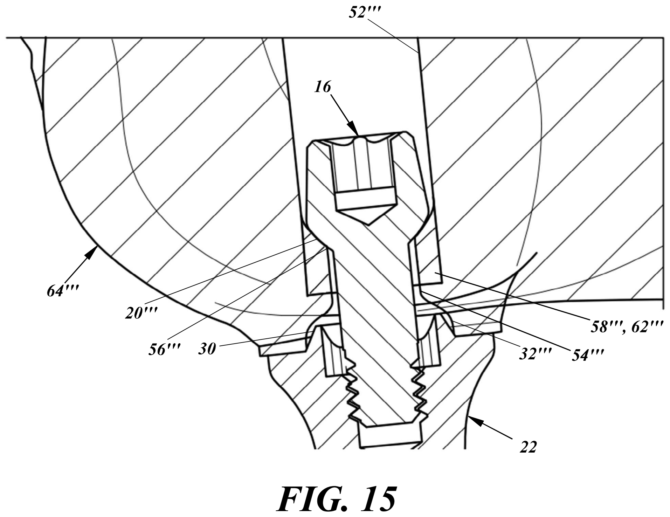

In an alternative embodiment, shown in Fig. 15, the screw seat 20 may be formed in a prosthetic substructure 62‴ which may comprise an annular base insert 58‴ (preferably a cylinder in shape) receivable within a superstructure 64‴ of the prosthetic (generally comprising the tooth-shaped portion of the prosthetic 14"). When received in the prosthetic 14", the base insert 58 may be located between at least portions of the spheric screw 16 and the prosthetic 14" so that tightening the screw 16 into an abutment 22, for example, will clamp the base insert 58 against a portion of the prosthetic 14", and thereby clamp a portion of the prosthetic 14" between the base insert 58 and the abutment 22. In this alternative embodiment, the screw seat 20 is located on the base insert 58, while the prosthetic 14" includes a base seat 60 shaped to receive the base insert 58. This base insert 58 may comprise a durable material such as, for example, titanium.

The base insert 58‴ may be more easily made of a stronger material than a prosthetic could be, thereby being more able to resist concentrated pressure from a misaligned non-spheric screw. However, directly seating the spheric screw 16 in the prosthetic 14 or 14' can be advantageous because the screw seat 20 can be formed higher in a prosthetic than the base seat 60, while leaving room for the screw head. This higher screw seat 20 requires the removal of less material from a given prosthetic, making that portion of the prosthetic stronger, and more resistant to damage.

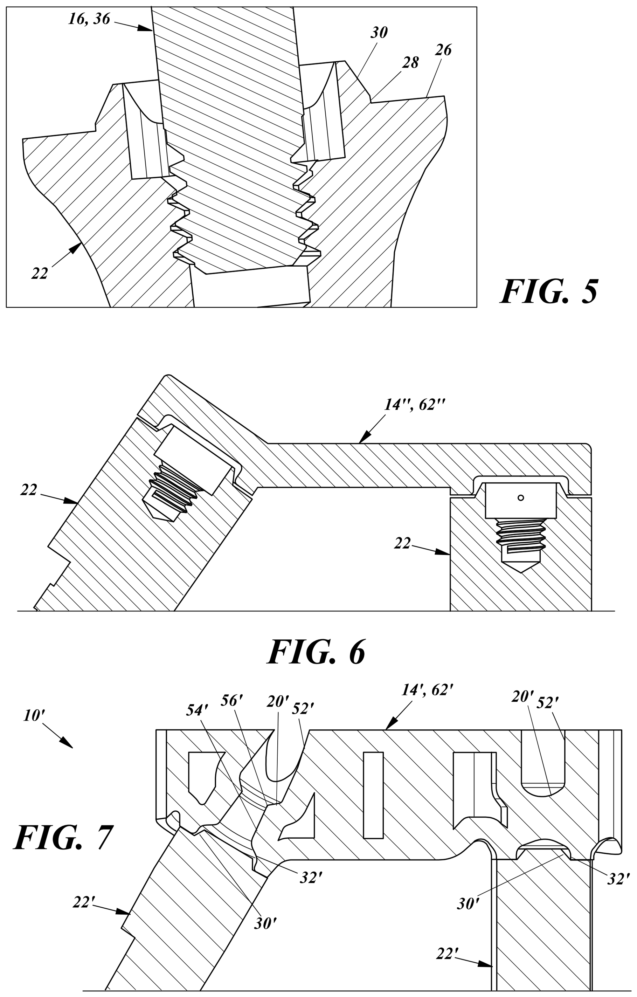

In further embodiments, the screw seat 20 may alternatively be formed in a part of a prosthetic 14' shaped to receive multiple abutments 22', as shown in Fig. 7. These larger prosthetics 14' may comprise substructures 62' (which may lack consistent terminology in the art due to variation, sometimes being called a bar, or framework, and may be considered part of the prosthetic 14' for the purposes of the claims). The substructure 62' may be shaped to receive a larger version of the superstructure 64 of the prosthetic 14 (generally consisting of a shape resembling multiple teeth), thereby adapting this embodiment of the prosthetic 14' to be supported by the multiple abutments 22.

Two more multiple-abutment examples are shown in the Figures. Fig. 6 shows an example of a similar substructure 62" that is shaped to receive multiple abutments 22", but lacks the screw seats 20 to receive spheric screws 16. And, for comparison, Fig. 8 shows an example of a prior-art substructure that includes screw seats and prosthetic sockets that are not compatible with the frustospherical screws 16 or abutments 22 of this invention.

Testing has shown that the frustospherical shape allows a spheric screw 16 to be tightened with greater torque than non-spheric screws without risking damage to the prosthetic 14. Adding a base insert 58 between either type of screw and the prosthetic 14 permits yet more torque to be applied without damage. In fact, testing indicates that a spheric screw 16 mounted in a screw seat 20 in the prosthetic 14 - without any base - can be tightened with more torque than a common flat-interface screw supported by a screw scat in a titanium base. This is despite the fact that the screw seat aperture 56 described above may be left wide enough to permit swiveling, resulting in less remaining surface area of the screw seat 20, compared to screw seats configured for older similarly-sized screws in the art. On paper, one might expect the relative reduction in surface area to produce inferior torque-tolerance relative to the prior art, but testing has shown the opposite.52

The locking cylinder 28 and cone 30 may be substantially smaller than those in common use. For example, smallest tested variant of the locking cylinder 28', shown in Fig. 2 may extend as little as 0.08mm from the platform 26', with the cone 30' extending another 0.17mm and tapering radially inward at an angle of 30 degrees. The total height of the boss, including cylinder 28' and cone 30', in this example, comes to 0.25mm from the platform 26'. The slightly larger embodiment shown in Fig. 1 is still substantially smaller than comparable known abutment features. Among other advantages, these relatively shortened abutment features improve the ability of prosthetics such as bridges to be secured to multiple abutments 22 when the abutments are installed at greater angulation relative to one-another.

Cones and/or locking cylinders (or analogous features) tend to be notably larger in the prior art, as shown in Fig. 8 because larger cones and cylinders that are closely-fitted to a prosthetic socket can ease the challenge of aligning and securing a prosthetic to an abutment, and prevent screws from binding. However, as a given set of multiple abutments increases in relative angle to one another, large cones and/or locking cylinders (or analogous features) can block prosthetics from being fitted over the abutments because they eventually exceed the ability of the prosthetic to be safely flexed inward to push over the protruding angled cones and cylinders, before being drawn outward again as the prosthetic is screwed to the abutments.

In contrast, the present assembly 10 may substantially rely on the spheric screw 16 to assist with alignment, requiring less alignment assistance from abutment cones 30. The assembly 10 may therefore use a smaller cone 30 and locking cylinder 28 which present a smaller obstacle to insertion of a prosthetic's sockets 32 over angled abutments 22, relying on the swiveling ability of the spheric screw 16 to mitigate the disadvantage of the smaller cone 30 and locking cylinder 28. The assembly 10 may further rely upon the interface between spheric screw 16 and screw seat 20 to spread out the loads of tightening, even when the screw 16 is initially misaligned in order to seek engagement with an abutment 22, and when drawing the abutment 22 into full engagement with the prosthetic 14. As a result, the assembly 10 provides sufficient tolerance for a prosthetic 14 to be installed atop any relative angle between abutments 22 that is currently plausible in the field.

To further improve the ability of the prosthetic 14 to be installed over non-parallel abutments 22, the prosthetic socket 32 may be formed to fit tightly around the locking cylinder 28, but extend loosely in a generally rounded concave shape around the cone 30, allowing for more room to maneuver the prosthetic 14 into position. The combination of small cone 30 and concave socket 32 could normally cause binding issues with prior art screws, but the spheric screw 16 can easily adjust to these circumstances, pull the prosthetic 14 into alignment, and lock it over the tiny locking ring of the abutment 22.

This description, rather than describing limitations of an invention, only illustrates embodiments of the invention recited in the claims. The language of this description is therefore exclusively descriptive and is non-limiting. Obviously, it's possible to modify this invention from what the description teaches. Within the scope of the claims, one may practice the invention other than as described above.

## Claims

1. A dental prosthetic mounting assembly comprising:
a screw comprising:
a head including a frustospherical engagement surface, and
a threaded shank extending axially from the head, the head and shank having a
common longitudinal rotational axis;
a dental prosthetic comprising a bore for receiving the screw; and
a screw seat disposed in the prosthetic and shaped to complement and engage the frustospherical engagement surface of the screw, and oriented so that the frustospherical engagement surface of the screw secures the prosthetic to an implant or abutment when the screw is seated in the screw seat and threadedly engaged with the implant or abutment, whereby acceptable load distribution is maintainable between the frustospherical engagement surfaces of the screw and screw seat despite axial misalignment of the screw and bore.

2. The dental prosthetic mounting assembly of claim 1 in which:
the prosthetic bore comprises:
an upper bore section sized to receive the screw shank and head, and
a lower bore section disposed coaxially with the upper bore section and having a diameter smaller than a diameter of the screw head and larger than a diameter of the screw shank; and
the screw seat extends between a lower end of the upper bore section and an upper end of the lower bore section.

3. The dental prosthetic mounting assembly of claim 1 or claim 2 in which the screw seat:
comprises an aperture axially aligned with the bore, the aperture having a diameter larger than the diameter of the screw shank, but less than the diameter of the frustospherical engagement surface of the screw; and
is configured to support the screw for pivotal motion about a center point equidistant
from all positions on the frustoconical engagement surface, when the screw head is engaged in the screw seat.

4. The dental prosthetic mounting assembly of any one of the preceding claims, in which:
the assembly includes a dental implant; and
the screw seat is oriented so that the frustospherical engagement surface of the screw secures the prosthetic directly to the dental implant when the screw is seated in the screw seat and threadedly engaged with the dental implant.

5. The dental prosthetic mounting assembly of any one of the preceding claims, in which:
the assembly includes an abutment configured to support the prosthetic; and
the screw seat is oriented so that the frustospherical engagement surface of the screw secures the prosthetic to the abutment when the screw is seated in the screw seat and threadedly engaged with the abutment.

6. The dental prosthetic mounting assembly of any one of the preceding claims, in which:
the abutment includes a boss integrally extending from a prosthetic-facing platform surface of the abutment, the boss comprising:
an outer cylindrical locking surface extending from the prosthetic-facing platform surface;
an outer frustoconical surface extending axially outward and tapering radially inward from around a distal outer end of the outer cylindrical locking surface; and
the prosthetic includes a socket shaped to complement and receive into engagement the outer cylindrical locking surface, thereby positively positioning the prosthetic relative to the abutment.

7. The dental prosthetic mounting assembly of Claim 6 in which the prosthetic's socket comprises a generally concave inner surface formed where it will leave an arched gap between the socket's inner surface and the outer frustoconical surface of the boss when the socket is engaging the outer cylindrical locking surface, whereby the socket's concave inner surface permits the frustoconical surface to be initially inserted despite greater degrees of axial and rotational misalignment with the bore.

8. The dental prosthetic mounting assembly of any one of the preceding claims, in which the screw seat is formed within the prosthetic.

9. The dental prosthetic mounting assembly of claim 8, in which the screw seat extends between a lower end of the upper bore of the prosthetic and an upper end of the lower bore of the prosthetic.

10. The dental prosthetic mounting assembly of any one of the preceding claims, in which:
the dental prosthetic includes a generally annular base insert received in a base seat of the prosthetic;
the screw seat is formed in the generally annular base insert; and
the base seat is shaped to receive the base insert within the prosthetic into a position where the base insert is disposed between the screw and the prosthetic when the screw is received in the annular base insert.

11. The dental prosthetic mounting assembly of any one of the preceding claims, in which:
the prosthetic includes a prosthetic superstructure resembling one or more teeth;
the prosthetic includes a prosthetic substructure shaped to receive multiple abutments and to receive the prosthetic superstructure;
the bore and screw seat are formed within the prosthetic substructure.

12. A dental prosthetic mounting assembly comprising:
first and second abutments mountable on respective first and second dental implants implanted in spaced-apart non-parallel positions in a patient's jaw, the abutments being axially-aligned with the implants and thus non-parallel with respect to one another when mounted, each abutment including a mounting boss comprising:
an outer cylindrical locking surface extending from the prosthetic-facing platform surface; and
an outer frustoconical surface extending axially outward and tapering radially inward from around a distal outer end of the outer cylindrical locking surface;
a dental prosthetic substructure for carrying a dental prosthetic superstructure and comprising first and second mounting sockets shaped and angled to receive the outer cylindrical locking surfaces and the outer frustoconical surfaces of the mounting bosses of the respective first and second nonparallel abutments, and each socket including an inner cylindrical locking surface that is disposed around a distal outer end of the socket and is shaped to complement and receive into engagement the outer cylindrical locking surface of the mounting boss of one of the first and second abutments; and
at least one of the mounting sockets comprises a generally concave inner surface formed such that it leaves an arched gap between the socket's inner surface and the outer frustoconical surface of the boss when the mounting socket is engaging the outer cylindrical locking surface of one of the abutments, whereby the socket's concave inner surface permits the frustoconical surface to be initially inserted despite greater degrees of axial and rotational misalignment with the bore.

13. The dental prosthetic mounting assembly of claim 12 comprising:
first and second screws, each comprising:
a head including a frustospherical engagement surface, and
a threaded shank extending axially from the head, the head and shank having a
common longitudinal rotational axis;
a dental prosthetic comprising first and second bores for receiving the first and second screws, respectively, and respective first and second screw seats coaxially disposed with the first and second bores, respectively, in the prosthetic, and shaped to complement and engage the frustospherical engagement surfaces of the respective first and second screws, and oriented such that the frustospherical engagement surfaces of the screws secure the prosthetic to the respective first and second abutments when the first and second screws are seated in the respective first and second screw seats and threadedly engaged with the respective first and second abutments, whereby the first and second screws have freedom of motion to swivel about more than one axis while engaged in their respective screw seats.
